(19) Europäisches Patentamt European Patent Office Office européen des brevets

(11) **EP 1 873 764 A1**

(12) **EUROPEAN PATENT APPLICATION**

(43) Date of publication:
**02.01.2008 Bulletin 2008/01**

(51) Int Cl.:
*G11B 7/0065* (2006.01)

(21) Application number: **06013569.6**

(22) Date of filing: **30.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Bayer Innovation Gmbh**
**51368 Leverkusen (DE)**

(72) Inventors:
• **Koppa, Pal**
 **2040 Budaörs (HU)**
• **Remenyi, Judit**
 **1028 Budapest (HU)**
• **Ujhelyi, Ferenc**
 **2146 Mogyorod (HU)**
• **Erdei, Gabor**
 **1111 Budapest (HU)**

(54) **Method and system for parallel optical decoding of digital phase image to intensity image**

(57) The present invention concerns a method for parallel optical decoding of a digital phase image to an intensity image by algorithmic encoding of a data page into phase image and parallel optical decoding by capturing the interference of the phase data page and its copy shifted by one or a few pixels with respect to each other.

**Fig. 2**

**Description**

The present invention concerns a method for parallel optical decoding of a digital phase image to an intensity image by algorithmic encoding of a data page into a phase image and parallel optical decoding by capturing the interference of the phase data page and its copy shifted by one or a few pixels with respect to each other.

In optical data storage the recording light beam is modulated according to the data to be stored. When data are stored on a recordable CD or DVD the recording light beam is switched on and off according to the binary data stream. So the amplitude of the light beam is temporally modulated. When data are read-out optically, the amplitude of a light beam is temporally modulated.

In holographic data storage an object beam and a reference beam are overlapped within the holographic storage medium. Overlapping of the two beams leads to an interference pattern, which is recorded within the storage medium. The object beam is modulated by means of a spatial light modulator (SLM) according to the data to be stored. In contrast to the temporal modulation of recording light beam in serial writing of bits on a recordable CD or DVD, a spatial modulation of recording light beam is applied in holographic data storage. But again, the amplitude of light is modulated according to the data to be stored. When the hologram is illuminated by the reference beam to read out the data, the object beam is reconstructed, which shows a spatial amplitude modulation.

Besides the modulation of amplitude of a light beam, there are other options, to encode data with a light beam, e.g. phase modulation.

Optical data storage using phase modulation is not common. But there are many advantages, especially in holographic data storage:

1. In case of Fourier hologram recording, i.e. if the recording holographic plate is at Fourier plane of the object to be recorded, the Fourier transformation of an amplitude object often leads to a very inhomogenous intensity distribution. This might cause some problems, because some areas of the holographic plate might be overexposed whereas other areas might be underexposed. The intensity distribution of the optical Fourier transform of phase object can be more homogeneous than of an intensity object, thus in case of Fourier hologram recording, phase objects can be more effectively recorded (GB patent 1320538).

2. For secure storage the encryption of the data in recording is needed (US patent 5940514). It can also be made more effective by use of phase object (Nomura, Javidi AO Vol. 39 2000).

3. Holographic storage is also well suited to fast associative readout (searching the memory by content), which shows much better properties for phase images (Renu John, Joby Joseph, Kehar Singh: Phase-image-based content-addressable holographic data storage, Opt. Comm. 232, 2004).

But there might be some problems, when using phase modulation for holographic data storage. When reconstructing the hologram, the spatial phase distribution of the diffracted wave front needs to be decoded into intensity modulation to be visualized or captured by a detector such as a CCD camera.

For this phase to intensity conversion interferometric techniques can be used, such as Mach-Zehnder interferometer using reference wave (Seo, Kim OL Vol 29 2003) or phase contrast imaging with common path interferometer (US Patent 6,011,874).

For the observation of phase objects (e.g. cells) the most popular method is Differential Interference Contrast (DIC) microscopy (FR Patent 1.059.123).

The object of the present invention is to provide a novel method and system for parallel optical decoding of digital phase image to intensity image, which is very simple, easy to implement and which works without complex hardware like above mentioned Differential Interference Contrast (DIC) microscope.

This object is surprisingly achieved by the method according to the present invention explained in detail below.

A method is presented for algorithmic encoding a data page (array of 1's and 0's or digital numbers) into phase image and parallel optical decoding by capturing the interference of the phase data page and its copy shifted by one or a few pixels with respect to each other. The 2 dimensional phase data page consists of discrete pixels of phase shifts:

$\Phi_{i,j}$; if the absolute value of the amplitude is constant ($E_0$) the electric field is $E(x_i, y_j) = \mathbf{E}^{\mathbf{in}}_{\mathbf{i,j}} = E_0 \cdot \exp(i \cdot \Phi_{i,j})$ For example the application of a diagonal shift of one pixel to the left and one pixel down can be described by the electric field of the input image $E_{in}$ according to equation 1:

$$\mathrm{E}_{i,j}^{out} = \mathrm{E}_{i,j}^{in} + \mathrm{E}_{i+1,j+1}^{in} \qquad (1)$$

If the pixels of the input image are encoded with 0 and $\pi$ phase, the possible electric field values are $\mathrm{E}_{i,j}^{in} = E_0\, e^{i\cdot 0} = E_0$ and $\mathrm{E}_{i,j}^{in} = E_0 \cdot e^{i\cdot\pi} = -E_0$ respectively and the output field is either 0 or $\pm\, 2 \cdot E_0$. The output intensity is proportional to either 0 or 4. $E_0^2$, so we obtain a simple binary intensity image:

$$\mathrm{I}_{i,j}^{out} \propto \left|\mathrm{E}_{i,j}^{out}\right|^2 = \left|\mathrm{E}_{i,j}^{in}\right|^2 + \left|\mathrm{E}_{i+1,j+1}^{in}\right|^2 + \mathrm{E}_{i,j}^{in\,*}\cdot\mathrm{E}_{i+1,j+1}^{in} + \mathrm{E}_{i,j}^{in}\cdot\mathrm{E}_{i+1,j+1}^{in\,*} = E_0^{\,2}(2\pm 2) \qquad (2)$$

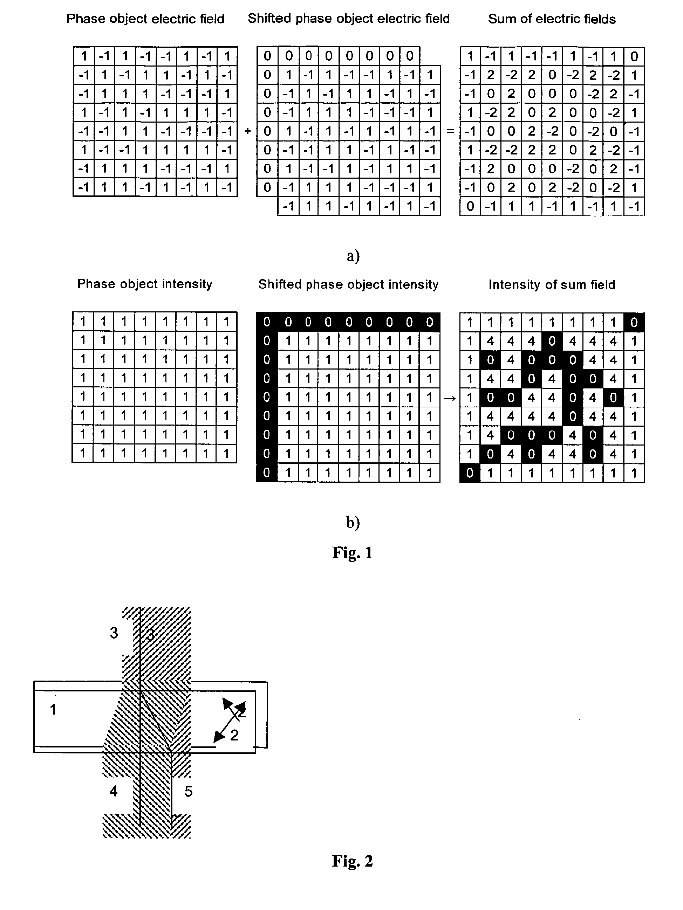

Figure 1 below shows the principle of the proposed technique on a simple image. Due to the limited size of the arrays, the boarder of the output image is not a real interference as only one phase image is present, thus it does not carry information, but the N-1 by N-1 core of the output represents the binary data according to (2).
Any digital data page can be coded into phase image according to the following simple recursive formula based on the inversion of (1):

$$\mathrm{E}_{i+1,j+1}^{in} = \mathrm{E}_{i,j}^{out} - \mathrm{E}_{i,j}^{in} \qquad (3)$$

If $D_{ij}$ binary data page (consisting of elements of 0 and 1) is needed to be generated at the output (the intensity is $\mathrm{I}^{out}_{i,j} = \mathrm{I}_0 \cdot D_{i,j}$ where $\mathrm{I}_0$ is a constant intensity), the recursive formula for the binary input phase page (consisting of elements of 0 and $\pi$ phases) is:

$$\Phi_{i+1,j+1} = \pi \cdot \left(\Phi_{i,j}\big/\pi + D_{i,j} - 1\right)$$

The image duplication and shift can be implemented by different optical solutions like a birefringent plate (as shown in Figure 2). If the birefringence axis is not parallel to the propagation direction of the incident beam, the propagation direction of the ordinary and the extraordinary polarization components is different, and thus the extraordinary component is laterally shifted after traversing the plate. In this way two phase images with orthogonal polarization are present after the plate. For making them interfere, a polarizer is to be placed with polarization axis angular to both the ordinary and the extraordinary polarization direction. The interference pattern then can be captured by a CCD camera for instance. (See the optical systems of Figure 3 and 4.)
The birefringent plate introduces constant phase shifts to the images, which can be different for the ordinary and the extraordinary images. The difference between them can be adjusted by slightly turning the plate from perpendicular incidence. If the phase difference is 0 or an integral multiple of $2\pi$, the above equations are valid. If the phase shifts are opposite i.e. the difference is $\pi$ or an odd multiple of $\pi$, the interference of the points with the same initial phases is dark, and that of points with initially different phases is bright. This adjustment is advantageous as in this case high contrast output image can be achieved even if the phase levels of the input images are not perfectly 0 and $\pi$.

**Brief description of the Figures**

Figure 1 demonstrates how a phase coded image is decoded to intensity image. Fig. 1 a) shows the complex amplitude of the phase coded image (containing values of 1 and -1 corresponding to phases of 0 and $\pi$), its spatially

shifted replica and the coherent sum of them. Fig. 1 b) shows the absolute value square of the amplitudes of Fig. 1 a) presenting the corresponding intensities. The first image table presents the intensity of the phase coded image, which is constant, the second is its spatially shifted replica, and the third is the intensity distribution of their interference. The inner part of the resulted image contains intensities of 0 and 4 providing the decoded binary image.

Figure 2 shows how a birefringent plate (1) can duplicate and shift an image by double refraction. In case of normal incidence, the ordinary polarization component (4) of the incident beam (3) traverse the plate without refraction, and the extraordinary one (5) is refracted at the incidence plane, propagates angularly in the plate, and exit from the plate parallel but shifted to the ordinary one. Also shown is the optical axis (2) of the birefringent plate.

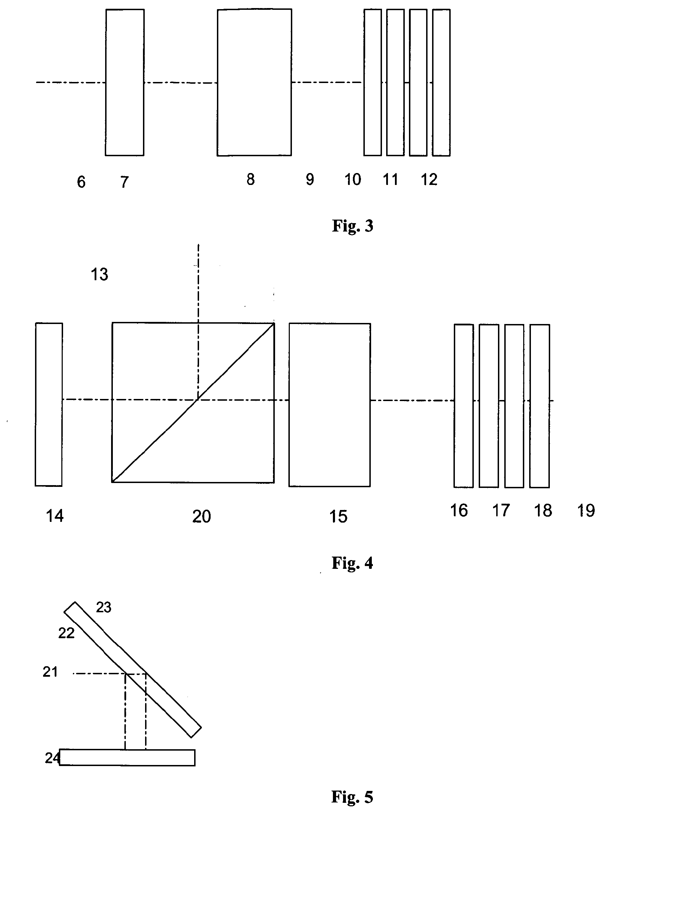

Figure 3 shows an embodiment of the decoding optical system using a birefringent plate for image duplication and shift in case of transparent phase object. The encoded phase image can be generated with a phase modulating spatial light modulator (7) illuminated with polarized plane wave (7). The imaging optics (8) projects the image of the phase object to the detector plane (12), and the image duplication and shift is made just before this plane. The birefringent plate (10) splits and shifts the extraordinary polarization from the ordinary one as shown on Fig. 2. The ratio of the intensities in the two beams is adjusted with the half-wave plate (9), and the polarizer (11) polarizes the two beams to the same direction in order to make them interfere, giving the decoded intensity pattern.

Figure 4 shows an embodiment of the decoding optical system using a birefringent plate for image duplication and shift in case of reflective phase object. The encoded phase image can be generated with a reflective phase modulating spatial light modulator (14) illuminated with plane wave (13) polarized by a polarizing beam splitter (20) which transmits the orthogonal polarization reflected from the phase modulating spatial light modulator (14) which may include a wave retarder to adjust the proper polarization). The imaging, shifting and capturing part is the same as in Fig. 3. The imaging optics (15) projects the image of the phase object to the detector plane (19), and the image duplication and shift is made just before this plane. The birefringent plate (17) splits and shifts the extraordinary polarization from the ordinary one as shown on Fig. 2. The ratio of the intensities in the two beams is adjusted with the half-wave plate (16), and the polarizer (18) polarizes the two beams to the same direction in order to make them interfere, giving the decoded intensity pattern.

Figure 5 shows an embodiment of the decoding optical system using a plan-parallel plate with a partly and a totally reflecting mirror for image duplication and shift. The encoded phase image carried by the laser beam (21) is imaged on the detector plane (24), and the image duplication and shift is made just before this plane. One portion of the beam is reflected on the front mirror (22) which is partly reflecting; the other part is reflected on the rear mirror (23) which is totally reflecting. The two beams interfere at the camera plane, giving the decoded intensity pattern.

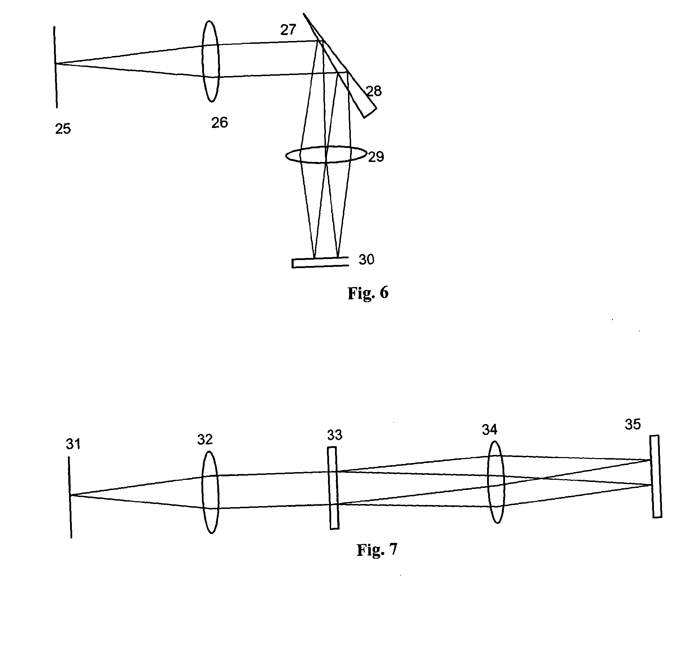

Figure 6 shows an embodiment of the decoding optical system realized with splitting the light beam and introducing angular shift between the beams at the Fourier plane of the phase image by a small angle prism with a partly and a totally reflective surface. The phase image (25) is at the front focal plane of the Fourier transforming lens (26), and at the back focal plane of the lens, a partly reflective mirror (27) reflects one part of the beam carrying the Fourier transform of the phase image and the other part is reflected on a totally reflective mirror (28) in an angularly shifted direction. The second Fourier transforming lens (29) gives the image plane (30) in its back focal plane, where the angular shift in the Fourier plane is transformed into spatial shift, and the two shifted images interfering give the intensity pattern.

Figure 7 shows an embodiment of the decoding optical system realized with splitting the light beam and introducing angular shift between the beams at the Fourier plane of the phase image by a diffracting or a Wollaston prism. The phase image (31) is at the front focal plane of the Fourier transforming lens (32), and at the back focal plane of the lens, a diffraction grating or a Wollaston prism (33) splits the beam carrying the Fourier transform of the phase image and introduces angular shift between the two beams. The second Fourier transforming lens (34) gives the image plane (35) in its back focal plane, where the angular shift in the Fourier plane is transformed into spatial shift, and the two shifted images interfering give the intensity pattern. If a Wollaston prism is used to split the beam into two with orthogonal polarization, a polarizer needs to be placed at the image plane with intermediate direction to make them interfere.

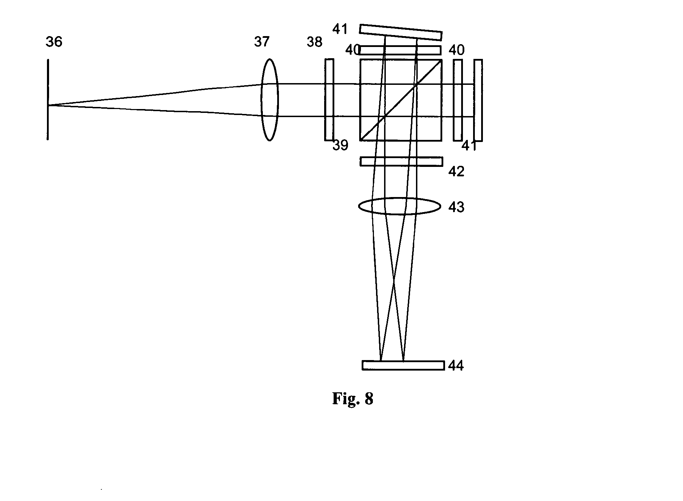

Figure 8 shows an embodiment of the decoding optical system realized with splitting the light beam and introducing angular shift between the beams at the Fourier plane of the phase image by a polarization beam splitter prism and two mirrors. The phase image (36) is at the front focal plane of the Fourier transforming lens (37), and at the back focal plane of the lens, that is the Fourier transform of the phase image, the beam is split into two and an angular shift is introduced between the two beams with the following setup. A polarization beam splitter prism (39) splits the beam; the intensity ratio of the transmitted and the reflected beams is set by a half-wave plate (38). Both the transmitted and the reflected beams are reflected back by a quarter-wave plate (40) and a mirror (41) at both side of the prism, and then they come out from the prism with a small angle shift between them. The two beams are of orthogonal polarization so a polarizer (42) with intermediate axis makes them able to interfere. The second Fourier transforming lens (43) gives the image plane (44) in its back focal plane, where the angular shift in the Fourier plane is transformed into spatial shift, and the two shifted images interfering give the intensity pattern.

## Claims

1. A method for encoding of an intensity image $I(x',y')$ into a phase image consisting of phase elements $\Phi(x_m,y_n)$ and parallel optical decoding, wherein the decoding method comprises duplicating the phase image and capturing the interference of the phase image of $\Phi(x_m,y_n)$ with its spatially shifted replica $\Phi(x_m+_a,Y_{n+b})$.

2. A method according to claim 1, wherein the image $I(x',y')$ to be encoded is binary according to $I(x',y')=I_0 D_{m',n'}$, where $I_0$ is a constant intensity and $D_{m',n'}$ is digital page containing 0's and 1's, and the coded phase image $\Phi(x_m,y_n)$ is also binary, and the encoding recursive formula is $\Phi_{m+a,n+b} = \pi \cdot (\Phi_{m,n} /\pi + D_{m',n'} -1)$.

3. A method according to claim 2, wherein the intensity of the phase image is homogeneous, and the interference pattern consists of domains of two intensity levels giving the 0 and 1 data of the decoded $D_{m',n'}$ digital page.

4. A method according to claim 1, wherein the image $I(x',y')$ to be encoded is multi-grayscale-leveled, and more than one encoded image is possible giving the same decoded image by the optical decoding.

5. A method according to claim 1, wherein the phase shift difference between the corresponding points of the two phase images is 0 or an even multiple of $2\pi$, and thus the encoded image points are bright and dark if the initial phases of the interfering points are equal and opposite respectively.

6. A method according to claim 1, wherein the phase shift difference between the corresponding points of the two phase images is $\pi$ or an odd multiple of $\pi$, and thus the encoded image points are dark and bright if the initial phases of the interfering points are equal and different respectively.

7. A method according to one of claims 1 to 6, wherein duplicating and spatial shifting of the phase image comprises splitting and shifting the light beam in the image plane.

8. A method according to claim 7, wherein splitting the light beam and shifting the image are realized with a birefringent plate and the capturing of the interference of the two orthogonally polarized images comprises polarizing the images to a mediate polarization direction.

9. A method according to claim 7, wherein splitting the light beam and shifting the image are realized with a partly and a totally reflective mirrors parallel to each others.

10. A method according to one of claims 1 to 6, wherein duplicating and spatial shifting of the phase image is realized by splitting the light beam and introducing angular shift between the two beams at the Fourier plane of the image.

11. A method according to claim 10, wherein splitting the light beam and introducing angular shift between the two beams are realized with a Wollaston prism.

12. A method according to claim 10, wherein splitting the light beam and introducing angular shift between the two beams are realized with beam splitter gratings.

13. A method according to claim 10, wherein splitting the light beam and introducing angular shift between the two beams are realized with a polarization beam splitter, mirrors and wave retarders.

14. A method according to claim 10, wherein splitting the light beam and introducing angular shift between the two beams are realized with partly and totally reflecting mirrors.

**15.** A method according to one of claims 1 to 6, wherein the encoded phase image is generated by a spatial light modulator.

**16.** A method for optical data storage comprising the encoding and parallel optical decoding method according to one of claims 1 to 15.

**17.** An apparatus for encoding of an intensity image I(x',y') into a phase image consisting of phase elements $\Phi(X_m,Y_n)$ and parallel optical decoding according to one of claims 1 to 15, said apparatus comprising means for splitting and shifting the light beam in the image plane selected from the group consisting of birefringent plate and an arrangement of a partly and a totally reflective mirrors parallel to each others.

**18.** An apparatus for encoding of an intensity image I(x',y') into a phase image consisting of phase elements $\Phi(x_m,y_n)$ and parallel optical decoding according to one of claims 1 to 15, said apparatus comprising means for splitting the light beam and introducing angular shift between the two beams at the Fourier plane of the image selected from the group consisting of Wollaston prism, beam splitter gratings, an arrangement of a polarization beam splitter, mirrors and wave retarder and an arrangement of with partly and totally reflecting mirrors.

Phase object electric field    Shifted phase object electric field    Sum of electric fields

a)

Phase object intensity    Shifted phase object intensity    Intensity of sum field

b)

**Fig. 1**

**Fig. 2**

6 7 8 9 10 11 12

**Fig. 3**

13

14 20 15 16 17 18 19

**Fig. 4**

23
22
21
24

**Fig. 5**

27

28

25                    26

29

30

**Fig. 6**

31          32          33          34          35

**Fig. 7**

**Fig. 8**

**European Patent Office**

**EUROPEAN SEARCH REPORT**

Application Number

EP 06 01 3569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2005/066876 A (TDK CORP [JP]; TSUKAGOSHI TAKUYA [JP]; YOSHINARI JIRO [JP]; MIURA HIDE) 21 July 2005 (2005-07-21) * the whole document * ----- | 1-18 | INV. G11B7/0065 |
| A | EP 1 585 117 A (SONY CORP [JP]) 12 October 2005 (2005-10-12) * the whole document * ----- | 1-18 | |
| A | WO 2005/057561 A (KONINKL PHILIPS ELECTRONICS NV [NL]; LIEDENBAUM COEN [NL]) 23 June 2005 (2005-06-23) * the whole document * ----- | 1-18 | |

TECHNICAL FIELDS
SEARCHED (IPC)

G11B
G06K
G03H

The present search report has been drawn up for all claims

| Place of search | Date of completion of the search | Examiner |
|---|---|---|
| Munich | 21 March 2007 | Kyranos, Elias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 01 3569

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2007

| Patent document cited in search report | | Publication date | Patent family member(s) | | Publication date |
|---|---|---|---|---|---|
| WO 2005066876 | A | 21-07-2005 | JP | 2005190636 A | 14-07-2005 |
| EP 1585117 | A | 12-10-2005 | CN | 1681016 A | 12-10-2005 |
| | | | JP | 2005292687 A | 20-10-2005 |
| | | | KR | 20060045492 A | 17-05-2006 |
| | | | US | 2005243389 A1 | 03-11-2005 |
| WO 2005057561 | A | 23-06-2005 | KR | 20060132841 A | 22-12-2006 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1320538 A
- US 5940514 A
- US 6011874 A
- FR 1059123

**Non-patent literature cited in the description**

- **NOMURA.** *Javidi AO,* 2000, vol. 39
- **RENU JOHN ; JOBY JOSEPH ; KEHAR SINGH.** Phase-image-based content-addressable holographic data storage. *Opt. Comm.,* 2004, 232
- **SEO.** *Kim OL,* 2003, vol. 29